# EUROPEAN PATENT APPLICATION

(11) **EP 3 920 472 A1**
(43) Date of publication of application: **08.12.2021**
(21) Application number: 19912209.4
(22) Date of filing: 22.07.2019
(51) Int. Cl.: H04L 12/58, G06Q 20/06

(54) **ELECTRONIC MAIL SYSTEM FUSED WITH CURRENCY PROTOCOLS, MAIL SENDING METHOD AND MAIL RECEIVING METHOD**

(30) Priority: 30.01.2019 CN 201910092306
(71) Applicant: Shanghai Finmail Network Technology Co., Ltd., Shanghai 201413 (CN)
(72) Inventor: ZHANG, Haimin, Shanghai 200442 (CN)
(74) Representative: Argyma
(86) International application number: PCT/CN2019/097045
(87) International publication number: WO 2020/155581

(57) **Abstract**

Disclosed is a currency-protocol converged e-mail system, including an e-mail client loaded with a remittance plug-in to provide a user with an e-mail interface with a remittance identifier, and a remittance-mail management server interacting with the e-mail client, an e-mail management server and a fund management server respectively. The remittance-mail management server cooperates with the e-mail management server and the fund management server, the remittance-mail management server judges whether an e-mail message contains the remittance identifier after receiving the e-mail message sent by the e-mail client, wherein if so, the remittance-mail management server dispatches the e-mail management server to send the e-mail message and dispatches the fund management server to perform remittance operations according to the remittance identifier; if not, the remittance-mail management server only dispatches the e-mail management server to send the e-mail message. The same platform and cross-platform synchronous transmission of information and value can be realized.

## Description

### BACKGROUND OF THE INVENTION

### Field of the Invention

The present invention relates to the technical field of electronic e-mail, in particular, to a currency-protocol converged e-mail system, and e-mail sending and receiving methods.

### Description of the Prior Art

With the popularization of the Internet, e-mail has become a widely used communication tool and is particularly important in business communication. As a kind of text file information, its content also has a high legal effect. However, due to the lack of value transmission capabilities, the conventional email system can only become an information carrier and cannot undertake financial responsibilities, thus greatly restricting its scope of application. Meanwhile, although banks or third-party payments have assumed the main responsibility of value transmission, their information transmission capabilities are very weak, and their business models are quite different from e-mail systems. They are basically two completely different forms.

On the other hand, the current development direction of blockchain and digital currency (such as Bitcoin, etc.) mainly refers to bank or third-party payment, but it is difficult to obtain similar transmission efficiency and legal protection, which lacks practical application foundation and cannot truly reflect the value of blockchain and digital currency. At the same time, anonymity also makes it difficult for digital currencies to obtain necessary legal support and supervision.

Also, despite the natural similarities between e-mail and digital currency (such as anonymity, accessible cross-platform transmission, low transmission cost and irreversibility, etc.), there is currently no invention and application that converges the two. For electronic currency, although it has been widely used in third-party payment and other fields, there is still a lack of inventions and applications that can send and receive electronic currency synchronously with e-mail. Most third-party payment systems only use e-mail addresses as user names, rather than synchronized sending and receiving with e-mails, so they are still bank models in nature.

Therefore, under the current conditions, the transmission of information and value needs to be carried out separately, which causes a great waste of time and cost, and may be easy to cause confusion and misunderstanding due to asynchronization of the transmission and then cause commercial and social disputes.

### SUMMARY OF THE INVENTION

The present application provides a currency-protocol converged e-mail system, and e-mail sending and receiving methods, combining the e-mail, the digital currency and the electronic currency, so as to solve the problem of separate transmission of existing information and value and improve the financial function of the e-mail system.

According to a first aspect, an embodiment provides a currency-protocol converged e-mail system, which includes a remittance plug-in, an e-mail client, a remittance mail management server, an e-mail management server and a fund management server;
the e-mail client is loaded with the remittance plug-in to provide a user with an e-mail interface with a remittance identifier, and the remittance identifier is carried with remittee information, an amount and a currency type, the currency type being a digital currency or/and an electronic currency;
the remittance mail management server interacts with the e-mail client, the e-mail management server and the fund management server respectively;
the remittance mail management server cooperates with the e-mail management server and the fund management server, and the remittance mail management server judges whether an e-mail message contains the remittance identifier after receiving the e-mail message sent by the e-mail client, wherein if so, the remittance mail management server dispatches the e-mail management server to send the e-mail message and dispatches the fund management server to perform remittance operations according to the remittance identifier; if not, the remittance mail management server only dispatches the e-mail management server to send the e-mail message.

According to a second aspect, an embodiment provides an e-mail sending method for the currency-protocol converged e-mail system, the e-mail system including a remittance plug-in, an email client, a remittance mail management server, an e-mail management server and a fund management server, the e-mail sending method including steps of:
determining whether the remittance plug-in is triggered, wherein if not, the e-mail client generates a regular mail and sends the regular mail to the remittance mail management server, and the remittance mail management server dispatches the e-mail management server to send the regular mail;
if yes,
the e-mail client runs the remittance plug-in to provide a user with an e-mail interface with a remittance identifier, and the remittance identifier is carried with the remittee information, the amount and the currency type, the currency type being a digital currency or/and an electronic currency;
obtaining the remittee information, the amount and the currency type through the remittance identifier, generating a remittance mail and sending the remittance mail to the remittance mail management server;
the remittance mail management server cooperating with the e-mail management server and the fund management server, dispatching the e-mail management server to send an e-mail message in the remittance mail, and dispatching the fund management server to perform a remittance operation in the remittance mail according to the remittance identifier.

According to a third aspect, an embodiment provides an e-mail receiving method for the currency-protocol converged e-mail system, the e-mail system including a remittance plug-in, an e-mail client, a remittance mail management server, an e-mail management server and a fund management server, the e-mail receiving method including steps of:
receiving an e-mail by the e-mail management server, and transmitting an e-mail message to the remittance mail management server;
determining whether the received e-mail contains a remittance identifier by the remittance mail management server, wherein if not, the e-mail is processed as a regular mail, the remittance identifier being carried with the remittee information of the currency, a possible transaction number, the amount and the currency type, the currency type being a digital currency or/and an electronic currency;
if yes, the received e-mail is the remittance mail, and relevant information of the remittance mail is transmitted to the fund management server;
querying a remittance status by the fund management server, and feeding back query results to the remittance mail management server;
sending the remittance mail and the relevant information to an e-mail client of the receiver according to the query results that are fed back by the remittance mail management server.

The e-mail system according to the above embodiment has the following beneficial effects:
1) based on the e-mail system, i.e., by converging the currency protocols in the conventional email system, synchronization of information transmission and value transmission may be achieved;
2) the sender and receiver of digital currency/electronic currency may also obtain real-name authentication through the e-mail system, thereby obtaining higher security, reliability and legal protection;
3) the financial function of the e-mail system may be improved;
4) cross-platform synchronous transmission of information and value is realized through the cross-system characteristics of e-mail and digital currency.

### BRIEF DESCRIPTION OF THE DRAWINGS

Fig. 1 is a view of a conventional e-mail message;
Fig. 2 is a view of a currency-protocol converged e-mail message;
Fig. 3 is a block diagram of an e-mail system of Embodiment One;
Fig. 4 is a view of an e-mail message with a remittance transaction number;
Fig. 5 is a block diagram of an e-mail system of Embodiment Two;
Fig. 6 is a block diagram of an e-mail system of Embodiment Three;
Fig. 7 is a view of sending an e-mail by an e-mail system of Embodiment Four;
Fig. 8 is a view of sending an e-mail with remittance by automatically replying to an e-mail;
Fig. 9 is a view of receiving an e-mail by an e-mail system of Embodiment Five.

### DESCRIPTION OF THE PREFERRED EMBODIMENTS

The present invention will be further explained in detail in combination with the drawings and specific implementation below.

Digital/encrypted currency: decentralized digital currency, such as Bitcoin and Litecoin, etc., generally generated through mining work and hereinafter referred to as digital currency.

Electronic currency: electronic conventional/legal currency or tokens and virtualized electronic currency of related payment services, such as PayPal and Alipay.

Regular mail: ordinary e-mail.

Remittance mail: an email with a body having a remittance identifier, such as Pay-To, i.e., Pay To, is sent while the remittance is synchronically performed.

Based on the natural similarities between e-mail and digital currency, such as anonymity, accessible cross-platform transmission, low transmission cost and irreversibility, etc., the digital currency protocol is converged into the conventional e-mail system. For the sake of generality, both the digital currency protocol and the electronic currency protocol are converged into the e-mail system in the present invention, so that the synchronous transmission of information and value through blockchain and digital/electronic currency protocols is realized in the conventional e-mail system.

### Embodiment One:

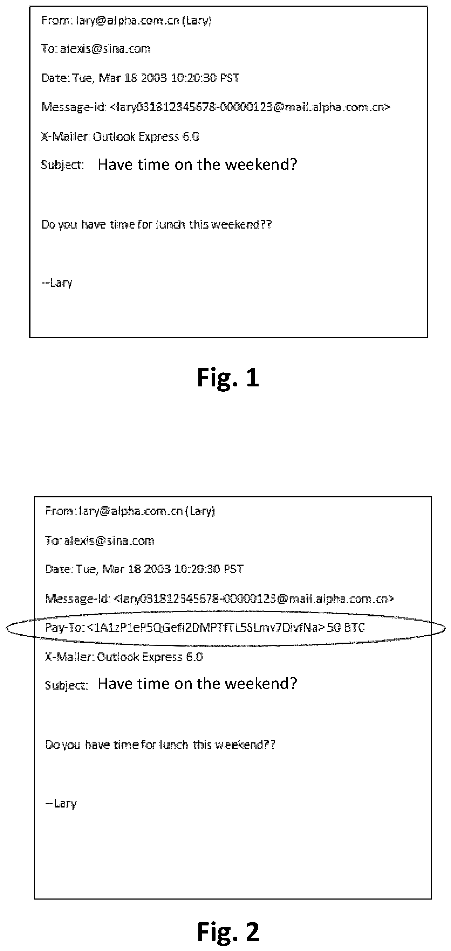

A diagram of the complete content of an e-mail message in a conventional e-mail system is shown in Fig. 1, and a diagram of the complete content of an e-mail message in a currency-protocol converged e-mail system in the present embodiment is shown in Fig. 2. In comparison with Fig. 1 and Fig. 2, it can be seen that a Pay-To field is added to Fig. 2. The Pay-To field is a newly-added field, which is added after the e-mail system is converged with the currency protocol, and the Pay-To field is used for remittance to realize the synchronization of information transmission and value transmission. The same fields in Fig. 1 and Fig. 2 are the format of a conventional email, which is well known to those skilled in the art, and thereafter will not be repeated in the present embodiment.

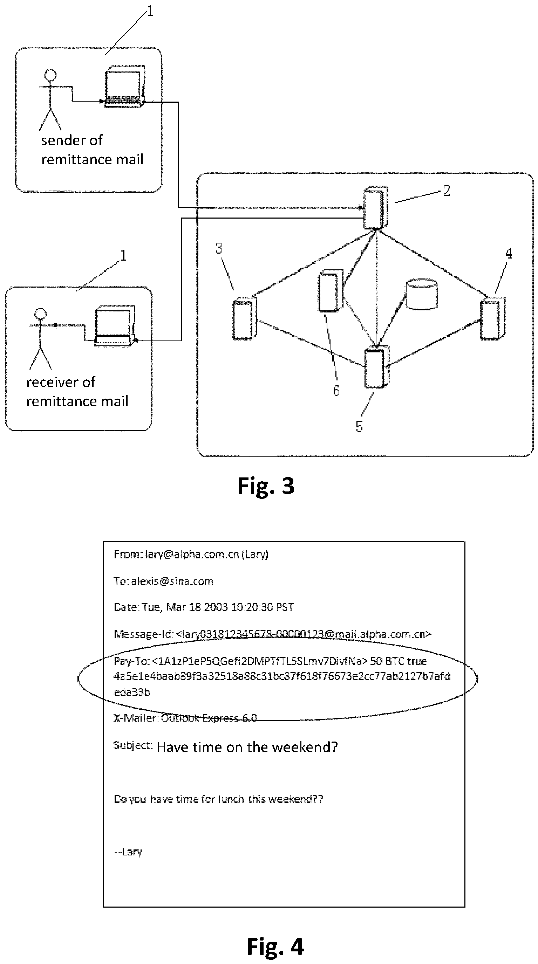

A currency-protocol-converged e-mail system provided by the present embodiment is shown in Fig. 3. The system includes a remittance plug-in (not shown in Fig. 3), an e-mail client 1, a remittance-mail management server 2, an e-mail management server 3 and a fund management server 4. Both the sender server terminal of the e-mail and remittance corresponding to the e-mail system and the receiver server terminal thereof in the present embodiment are in the network where the server of the system is located, generally located in an internal LAN or cloud network.

The e-mail client 1 is loaded with the remittance plug-in, which may be a piece of code of a running program or a control independent in the e-mail client 1. The e-mail client 1 is connected to the control through an interface. When the e-mail client 1 runs the program, the code corresponding to the remittance plug-in can be directly run to provide users with an e-mail interface with a remittance identifier, which may be located at any position in a browsing page of the e-mail interface. If the e-mail only sends multimedia messages, the remittance identifier can't be added in the body. Therefore, preferably, the remittance identifier is located in the e-mail header of the e-mail interface, so that no matter what content the e-mail sends, the remittance identifier can be added to the mail header, as shown in Fig. 2.

The remittance identifier may be any one or a combination of remittance fields (Pay-To), remittance windows, views, and visual identification elements, and the remittance identifier is displayed on the e-mail interface for the user to identify. When the user needs a remittance operation, the remittance identifier may be triggered.

In order to facilitate users to use the e-mail system for remittance, the remittance identifier is carried with information about the remittee of currency, an amount, a type of currency and other information for users to choose, wherein the type of currency may be a digital currency, an electronic currency, or a combination of the digital currency and the electronic currency.

The remittance identifier may include one or more remittee information, and each remittee information must provide at least one of the following information:
a digital currency address of the remittee, such as Bitcoin, Litecoin, etc.;
a name corresponding to the digital currency address of the remittee, and the name can be stored in the address book of the e-mail system;
an account and a service provider bound to the digital currency or the electronic currency of the remittee, and the account can be an email account or a mobile phone number, etc.;
a name corresponding commonly to the account and the service provider bound to the digital currency or the electronic currency of the remittee, and the name can be stored in the address book of the e-mail system.

It should be noted that one address book name may only correspond to one digital currency address, or the account number and service provider bound to one digital/electronic currency; the account number bound to the remittee must be able to receive the sender's remittance, e.g., two accounts are located in this system. If the remittee address is an account outside the system, the user is required to designate the corresponding service provider.

In addition to providing the user with the above information, the remittance identifier may also provide the user with the following optional information, which may be set in advance through user account preferences and hence does not have to be displayed on the e-mail interface, specifically:
1) if there is a remittee who receives the digital currency, the transfer priority, transfer speed, or transfer rate may be specified for each digital currency;
2) if a digital currency private key of the sender must be obtained through a third party or a local file, a method of obtaining the key must be provided, such as uploading a local private key file or sharing third-party information.

Similarly, the e-mail system in the present embodiment must also store basic user account information, which includes: a user mailbox (i.e., a user name), digital currency address and balance, electronic currency address and balance, user security settings, user preference settings, and user identity authentication information.

When the user logs in to the e-mail system of the present embodiment through the user name, the user may recharge the digital currency balance of the account through the digital currency, such as by transferring in Bitcoin, or under the framework of laws and related authentication, the user may recharge the electronic currency balance of the account through banks and other institutions, such as by transferring through banks.

If the user only needs to send a regular mail, the user does not need to operate the remittance identifier; if the user needs to send a remittance email, the user will perform operations as the ones for the regular mail and provide the information about receiver and other items, then provide the remittee address, amount, and unit of all remittees through the remittance identifier, wherein if the remittee address is a digital currency address, different remittees may specify different types of digital currencies, and if the remittee address is the account, the different remittees may specify the accounts of different service providers, all of which but have to be able to receive the sender's remittance.

After the user fills through the remittance identifier, the e-mail client 1 edits the e-mail and loads the mail header; the system will add a payment header to the header of the regular mail, wherein for example, the format of the Pay-To field is:
Pay-To: [Remittee Name] <Remittee Address> <Amount> <Unit> [Service Provider];
for example: /Pay-To: <1A1zP1eP5QGefi2DMPTfTL5SLmv7DivfNa> 50 BTC/ ;
/Pay-To: "Payee1" <1A1zP1eP5QGefi2DMPTfTL5SLmv7DivfNa> 50 BTC/ ;
/Pay-To: <abcd1234@abcd.com> 100 CNY payserv1/ ;
/Pay-To: "Payee2" <abcd1234@abcd.com> 100 CNY payserv1/.
"//" is used to distinguish the complete "Pay-To" header, and the "//" character itself does not belong to the "Pay-To" header.

In the present embodiment, the remittance-mail management server 2 interacts with the e-mail client 1, an e-mail management server 3 and a fund management server 4 respectively; the remittance-mail management server 2 cooperates with the e-mail management server 3 and the fund management server 4, the remittance-mail management server 2 judges whether an e-mail message contains the remittance identifier after receiving the e-mail message sent by the e-mail client 1, wherein if so, the remittance-mail management server 2 dispatches the e-mail management server 3 to send the e-mail message and dispatches the fund management server 4 to perform remittance operations according to the remittance identifier; if not, the remittance-mail management server 2 only dispatches the e-mail management server 3 to send the e-mail message.

In the present embodiment, the remittance-mail management server 2 cooperates with the e-mail management server 3 and the fund management server 4, so as to realize the synchronization of mail information transmission and value transmission, and improve the financial functions of conventional e-mail system.

Further, in order to improve the reliability of remittance by the e-mail, in the present embodiment, before the remittance-mail management server 2 dispatches the fund management server 4, the remittance-mail management server 2 first dispatches the e-mail management server 3 to send the email message, and after the remittance-mail management server 2 receives an instruction that the email management server 3 sends back the e-mail message successfully, the remittance-mail management server 2 then dispatches the fund management server 4; specifically, the remittance-mail management server 2 will first try to send the e-mail to all receivers, wherein if at least one of the receivers may successfully receive the sent e-mail, the remittance-mail management server 2 then dispatches the fund management server 4 to perform the remittance operation, otherwise the remittance is cancelled.

Further, since the e-mail system in the present embodiment realizes the remittance within the system, the present embodiment further includes a database server 5, the database server 5 being configured to store fund information of a remitter and a remittee including at least a user account number, a transaction information and an amount of funds, the database server 5 interacting with the remittance-mail management server 2 and the fund management server 4 respectively, the fund management server 4 sending a remittance request to the database server 5 according to a dispatch instruction of the remittance-mail management server 2, the database server 5 updating the fund information related to the current remittance of the remitter and the remittee according to the remittance request to realize an internal remittance.

Correspondingly, the remittance-mail management server 2 also sends an email containing the status and result of the remittance to the receiver and the sender according to the e-mail address based on the updated fund information in the database server 5; in other words, during the remittance period, dynamic information may be provided in the form of e-mail for the receiver and the sender; if supported by the systems of both parties, the dynamic information may be an interactive progress bar.

Further, in order to ensure the safety and reliability of the transmission of the e-mail system, in the present embodiment further includes an authentication server 6, the authentication server 6 interacting with the database server 5 and the remittance-mail management server 2, the authentication server 6 being configured to authenticate a user identity. For example, the authentication server 6 verifies the identity of the sender and provides remittance details for the sender to reconfirm the authenticated information, and then after the remittance-mail management server 2 obtains the user authentication status through the authentication server 6 and confirms validity, the remittance-mail management server 2 then cooperates with the e-mail management server 3 and the fund management server 4.

Further, since the e-mail system in the present embodiment is served for the internal remittance of the system, the remittance transaction number can be obtained in advance before the actual remittance. Therefore, in order to enable all parties to correctly track the progress of the remittance in the present embodiment, when the e-mail client 1 edits the e-mail and loads the e-mail header, the system will add the payment header to the header of the regular mail. The payment header carries the remittance transaction number, i.e., the e-mail message also carries the remittance transaction number so that all parties may correctly track the progress of the remittance through the remittance transaction number. A diagram of the content information of the e-mail carrying the remittance transaction number is shown in Fig. 4.

For example: the format of the Pay-To field is:
Pay-To: [Remittee Name] <Remittee Address> <Amount> <Unit> <Is there a transaction number> [Transaction Number] [Service Provider Identifier];
for example: /Pay-To: <1A1zP1eP5QGefi2DMPTfTL5SLmv7DivfNa> 50 BTC true 4a5ele4baab89f3a32518a88c31bc87f618f76673e2cc77ab2127b7afdeda33b/ ;
/Pay-To: "Payee1" <1A1zP1eP5QGefi2DMPTfTL5SLmv7DivfNa> 50 BTC true 4a5ele4baab89f3a32518a88c31bc87f618f76673e2cc77ab2127b7afdeda33b/ ;
/Pay-To: <abcd1234@abcd.com> 100 CNY false payserv1/ ;
/Pay-To: "Payee2" <abcd1234@abcd.com> 100 CNY false payserv1/.

The e-mail system provided in the present embodiment may realize the synchronous transmission of digital/electronic currency and e-mail by adding the remittance identifier, i.e., realizing the synchronous transmission of information and value, and the sender and receiver of digital/electronic currency may also obtain real-name authentication through the e-mail system, thereby obtaining higher security, reliability and legal protection, and further improving the financial function of the e-mail system, such as sending and receiving bills, automatic deductions and payments, identity authentication and address authentication via e-mails; in this way, the reliability and efficiency of business communication and life applications may be greatly improved, and the related costs are reduced. By converging the electronic currency protocol, the e-mail system of the present embodiment may also implement some of the aforementioned financial functions through the electronic currency, and the characteristics of exchanging the digital currency with the electronic currency under the legal framework may be added.

It is to be noted that in order to prevent others from stealing or tampering with e-mails during transmission and remittance, the e-mail system in the present embodiment also ensures the reliability of the communication and remittance process and the authenticity of the identity/source with certain security and authentication mechanisms. For example, during the transmission process, encryption methods such as PGP or digital signature are required to ensure that the e-mail may not be tampered with or stolen, and the encryption and digital certificates are used to ensure the security of the remittance transmission and the authenticity of the source.

### Embodiment Two:

Based on Embodiment One, the present embodiment further provides a currency-protocol converged e-mail system. Different from Embodiment One, in the e-mail system of the present embodiment, the e-mail receiver is located outside the system, and the digital/electronic currency account of the remittee is located inside the system. Therefore, the e-mail in the present embodiment, i.e., the transmission of information, needs to be cross-system; while the remittance, i.e., the transmission of value, needs to be carried out internally.

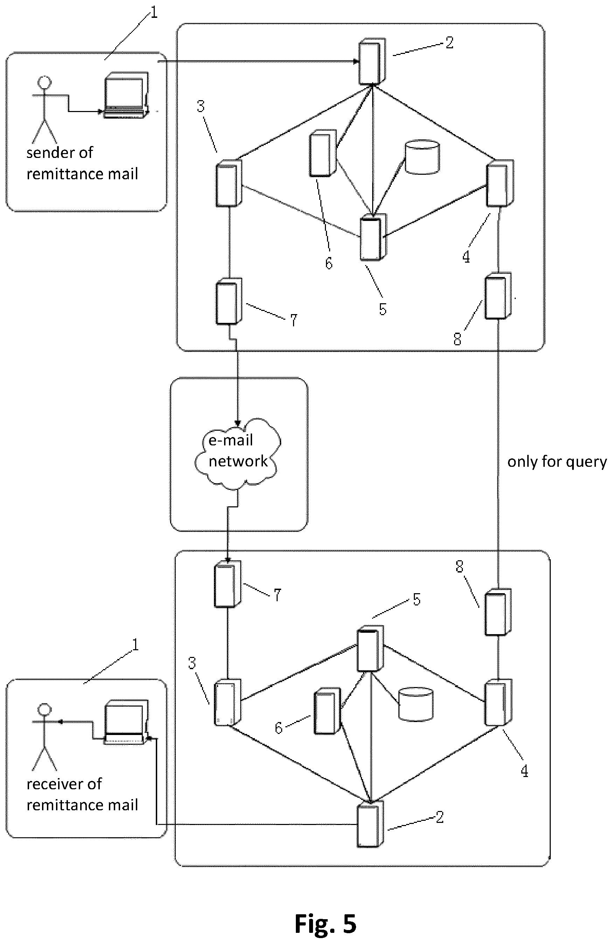

A diagram of the e-mail system in the present embodiment is shown in Fig. 5. The e-mail system of the receiver has the same architecture as the e-mail system of the sender, and in the present embodiment, the architecture of the e-mail system of the sender is taken as an example for detailed description. The e-mail system includes a remittance plug-in (not shown), an e-mail client 1, a remittance-mail management server 2, an e-mail management server 3, a fund management server 4, a database server 5, an authentication server 6, an e-mail interaction server 7, and a third-party digital/electronic currency interaction server 8. For specific descriptions of the remittance plug-in, the e-mail client 1, the remittance-mail management server 2, the e-mail management server 3, the fund management server 4, the database server 5, and the authentication server 6, please refer to Embodiment One, which will not be repeated in the present embodiment. The e-mail interaction server 7 is an internal and external network interface of the e-mail system, which may send e-mails between different platforms. The third-party digital/electronic currency interaction server 8 is also the internal and external network interface of the e-mail system, which may realize remittance and inquiry between different platforms.

The e-mail interaction server 7 interacts with the e-mail management server 3 through network to convert an internal request from the e-mail management server 3 and external e-mail message from a network according to a relevant protocol to perform information sending and receiving operations. For example, the e-mail interaction server 7 is a server running an e-mail service program (such as Postfix), and sends e-mails to the outside through a public e-mail network. The third-party digital/electronic currency interaction server 8 interacts with the fund management server 4 to convert the internal request from the fund management server 4 and the external request from the network according to the relevant protocol to perform query and remittance operations. For example, the third-party digital/electronic currency interaction server 8 is a server that supports local or third-party interfaces (such as node.js or nginx, etc.). In the present embodiment, the third-party digital/electronic currency interaction server 8 is only used to perform query operations.

When the e-mail system of the present embodiment is applied to the sender, it has the following work flows: the sender operates through the e-mail client 1 such as a PC, a web page, etc., the e-mail client 1 sends the relevant request of the sender to the remittance-mail management server 2, the remittance-mail management server 2 obtains a user authentication status through the user authentication server 6, and after the validity is confirmed, the remittance-mail management server 2 cooperates with the e-mail management server 3 and the fund management server 4 to send the regular mail or the remittance mail to the receiver through the e-mail network and to perform internal remittance through the fund management server 4; specifically, the e-mail interaction server 7 converts the internal request from the e-mail management server 3 into external e-mail message according to the relevant protocol to perform information transmission; the fund management server 4 sends a remittance request to the database server 5 according to the dispatch instruction of the remittance-mail management server 2, and the database server 5 updates the fund information related to the remittance of the remitter and the remittee according to the remittance request to realize internal remittance; at the same time, the remittance-mail management server 2, the e-mail management server 3, the fund management server 4, and the authentication server 6 are all connected to the database server 5 for data query and update.

When the e-mail system of the present embodiment is used to receive the remittance mail for the receiver, it has the following work flows: the e-mail management server 3 transfers the e-mail information of the remittance mail to the remittance-mail management server 2 after receiving the remittance mail from the e-mail network through the e-mail interaction server 7, the remittance-mail management server transmits the relevant information to the fund management server 4 after recognizing the remittance information, the fund management server 4 queries the sender for the remittance status through the third-party digital/electronic currency interaction server 8 and feeds back query results to the remittance-mail management server 2, the remittance-mail management server 2 obtains the authentication status through the user authentication server 6 and transmits the remittance mail and related information to the e-mail client 1 of the receiver after the validity is confirmed, and then the receiver obtains e-mail and remittance information through the e-mail client 1 such as PCs and web pages while the remittance-mail management server 2, the e-mail management server 3, the fund management server 4, and the authentication server 6 being all connected to the database server 5 for data query and update.

Further, in order to enable all parties to correctly track the progress of the remittance, and since the e-mail system in the present embodiment is served for the internal remittance of the system, the remittance transaction number may be obtained in advance before the actual remittance; wherein for specific description, please refer to Embodiment One, which will not be repeated in the present embodiment.

The e-mail system provided in the present embodiment may realize the partial cross-platform synchronous transmission of digital/electronic currency and e-mail by adding the remittance identifier, i.e., realizing the partial cross-platform synchronous transmission of information and value, and the sender and receiver of digital/electronic currency may also obtain real-name authentication through the e-mail system, thereby obtaining higher security, reliability and legal protection, and further improving the financial function of the e-mail system, such as sending and receiving bills, automatic deductions and payments, identity authentication and address authentication via e-mails; in this way, the reliability and efficiency of business communication and life applications may be greatly improved, and the related costs are reduced. By converging the electronic currency protocol, the e-mail system of the present embodiment may also implement some of the aforementioned financial functions through electronic currency, and the characteristics of exchanging the digital currency with the electronic currency under the legal framework may be added.

### Embodiment Three:

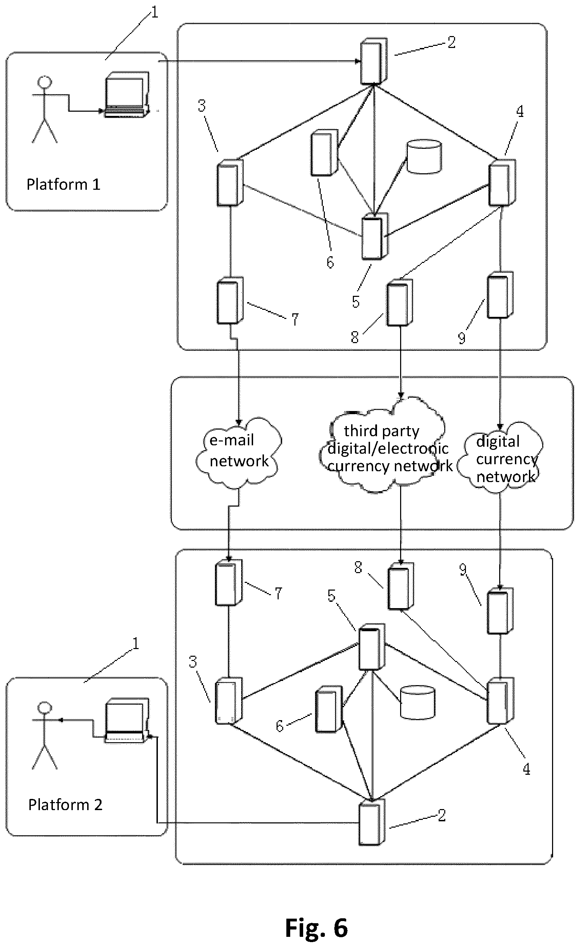

Based on Embodiments One and Two, the present embodiment further provides a currency-protocol converged e-mail system; different from Embodiments One and Two, the e-mail system of the present embodiment may realize the cross-system transmission of information and value between the sender and the receiver, and a diagram of the e-mail system in the present embodiment is shown in Fig. 6. The e-mail system of the receiver has the same architecture as the e-mail system of the sender, and in the present embodiment, the architecture of the e-mail system of the sender is taken as an example for detailed description. The e-mail system includes a remittance plug-in (not shown), an e-mail client 1, a remittance-mail management server 2, an e-mail management server 3, a fund management server 4, a database server 5, an authentication server 6, an e-mail interaction server 7, a third-party digital/electronic currency interaction server 8, and a digital currency interaction server 9, wherein for the specific descriptions of the e-mail client 1, the remittance-mail management server 2, the e-mail management server 3, the fund management server 4, the database server 5, the authentication server 6, the e-mail interaction server 7, and the third-party digital/electronic currency interaction server 8, please refer to Embodiment Two, which will not repeated in the present embodiment. The digital currency interaction server 9 is an internal and external network interface of the e-mail system, which may realize remittance and query between different platforms.

The digital currency interaction server 9 interacts with the fund management server 4 to convert the internal request from the fund management server 4 and the external request from the network according to the relevant protocol to perform query and remittance operations. For example, the digital currency interaction server 9 is a server that runs a digital currency service program (such as Bitcoin Core daemon).

When the e-mail system of the present embodiment is applied to the sender, it has the following work flows: the sender operates through the e-mail client 1 such as a PC, a web page, etc., the e-mail client 1 sends the relevant request of the sender to the remittance-mail management server 2, the remittance-mail management server 2 obtains a user authentication status through the user authentication server 6, and after the validity is confirmed, the remittance-mail management server 2 cooperates with the e-mail management server 3 and the fund management server 4 to send the regular mail or the remittance mail to the receiver through the e-mail network; specifically, the e-mail interaction server 7 converts the internal request from the e-mail management server 3 into external email message according to the relevant protocol to perform information transmission; the third party/digital currency interaction server 8 or/and the digital currency interaction server 9 converts an internal request from the fund management server 4 into an external request according to the relevant protocol to perform the remittance operation while the remittance-mail management server 2, the email management server 3, the fund management server 4, and the authentication server 6 being all connected to the database server 5 for data query and update.

When the e-mail system of the present embodiment is used to receive the remittance mail for the receiver, it has the following work flows: the e-mail management server 3 transfers the e-mail information of the remittance mail to the remittance-mail management server 2 after receiving the remittance mail from the e-mail network through the e-mail interaction server 7, the remittance-mail management server 2 transmits the relevant information to the fund management server 4 after recognizing the remittance information, the fund management server 4 queries the sender for the remittance status through the third-party digital/electronic currency interaction server 8 or/and the digital currency interaction server 9 and feeds back query results to the remittance-mail management server 2, the remittance-mail management server 2 obtains the authentication status through the user authentication server 6 and transmits the remittance mail and related information to the e-mail client 1 of the receiver after the validity is confirmed, and then the receiver obtains e-mail and remittance information through the e-mail client 1 such as PCs and web pages while the remittance-mail management server 2, the e-mail management server 3, the fund management server 4, and the authentication server 6 being all connected to the database server 5 for data query and update.

During the process of the above transmission of information and value, if the remittance operation is performed through the third-party digital/electronic currency interaction server 8, the remittance transaction number may generally only be obtained after the actual remittance due to the payment through the third party; therefore, the third-party digital/electronic currency interaction server 8 feeds back remittance results containing a remittance transaction number to the fund management server 4 after converting the internal request from the fund management server 4 into the external request according to the relevant protocol to perform the remittance operation, the fund management server 4 feeds back the remittance transaction number to the remittance-mail management server 2, the remittance-mail management server 2 dispatches the e-mail management server 3 to send the auxiliary e-mail to the receiver and the sender, and displays the auxiliary e-mail including the remittance transaction number to the sender through the e-mail client 1; in this way, all parties may accurately track the progress of the remittance through the remittance transaction number.

Similarly, if the remittance operation is performed by the digital currency interaction server 9 so that the remittance transaction number may be obtained in advance before the actual remittance; therefore, in the present embodiment, when the e-mail client 1 of the sender edits the e-mail and loads the e-mail header, the system will add the payment header to the header of the regular mail, and the payment header also carries the remittance transaction number, i.e., the e-mail message also carries the remittance transaction number, so that all parties may correctly track the progress of the remittance through the remittance transaction number, wherein a diagram of the content information of the e-mail carrying the remittance transaction number is shown in Fig. 4. For specific descriptions of the above operations, please refer to Embodiment One, which will not repeated in the present embodiment.

The present embodiment is also suitable for the situation where the remittee and the remitter are in the same system and the receiving information contains a digital currency address. When a user performs remittance to a digital currency address of a certain user in the system, mismatch and confusion between the digital currency protocol and the internal remittance transaction number may be caused if the internal remittance through the fund management server 4 is adopted. Therefore, by adopting the cross-system remittance method of the present embodiment, the actual digital currency transaction number may be obtained, thereby avoiding the above problems.

The e-mail system provided in the present embodiment may realize the cross-platform synchronous transmission of digital/electronic currency and e-mail by adding the remittance identifier, i.e., realizing the cross-platform synchronous transmission of information and value, and the sender and receiver of digital/electronic currency may also obtain real-name authentication through the e-mail system, thereby obtaining higher security, reliability and legal protection, and further improving the financial function of the e-mail system, such as sending and receiving bills, automatic deductions and payments, identity authentication and address authentication via e-mails; in this way, the reliability and efficiency of business communication and life applications may be greatly improved, and the related costs are reduced. By converging the electronic currency protocol, the e-mail system of the present embodiment may also implement some of the aforementioned financial functions through electronic currency, and characteristics of exchanging the digital currency and the electronic currency under the legal framework may be added.

### Embodiment Four:

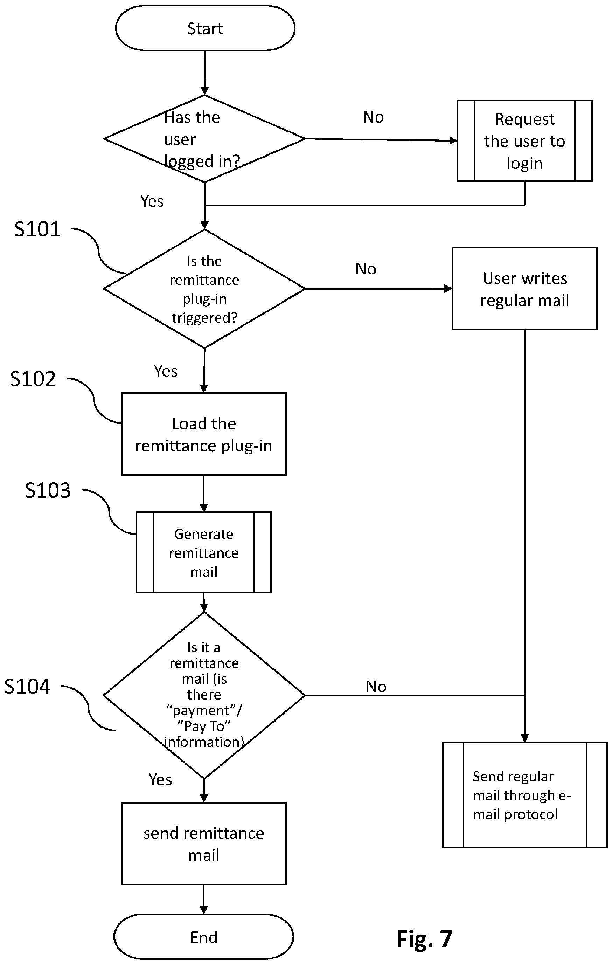

Based on Embodiments One, Two, and Three, the present embodiment provides an e-mail sending method for the currency-protocol converged e-mail system, the e-mail system including a remittance plug-in, an e-mail client, a remittance-mail management server, an e-mail management server and a fund management server. For the specific description of the e-mail system, please refer to Embodiment One, which will not be repeated in the present embodiment. The e-mail sending method is applied to the e-mail system of Embodiment One to realize the synchronous transmission of information and value within the system, and the method specifically includes the following steps, with a flow chart shown in Fig. 7.

S101: determining whether the remittance plug-in is triggered, wherein if not, the e-mail client generates a regular mail and sends the regular mail to the remittance-mail management server, and the remittance-mail management server dispatches the e-mail management server to send the regular mail. If the remittance plug-in is triggered:
S102: the e-mail client runs the remittance plug-in to provide a user with an e-mail interface with a remittance identifier, and the remittance identifier is carried with the remittee information, the amount and the currency type, the currency type being a digital currency or/and an electronic currency.

Preferably, the remittance identifier is located in an e-mail header of the e-mail interface, and the remittance identifier is any one or a combination of a remittance field, a remittance window, a view, and a visual identification element.

The remittee information includes at least one of:
a digital currency address of the remittee;
a name corresponding to the digital currency address of the remittee;
an account and a service provider bound to the digital currency or the electronic currency of the remittee;
a name corresponding commonly to the account and the service provider bound to the digital currency or the electronic currency of the remittee.

S103: the remittee information, the amount and the currency type are obtained through the remittance identifier, a remittance mail is generated, and the remittance mail is sent to the remittance-mail management server.

S104: the remittance-mail management server cooperates with the e-mail management server and the fund management server, dispatches the e-mail management server to send an e-mail message in the remittance mail, and dispatches the fund management server to perform a remittance operation in the remittance mail according to the remittance identifier.

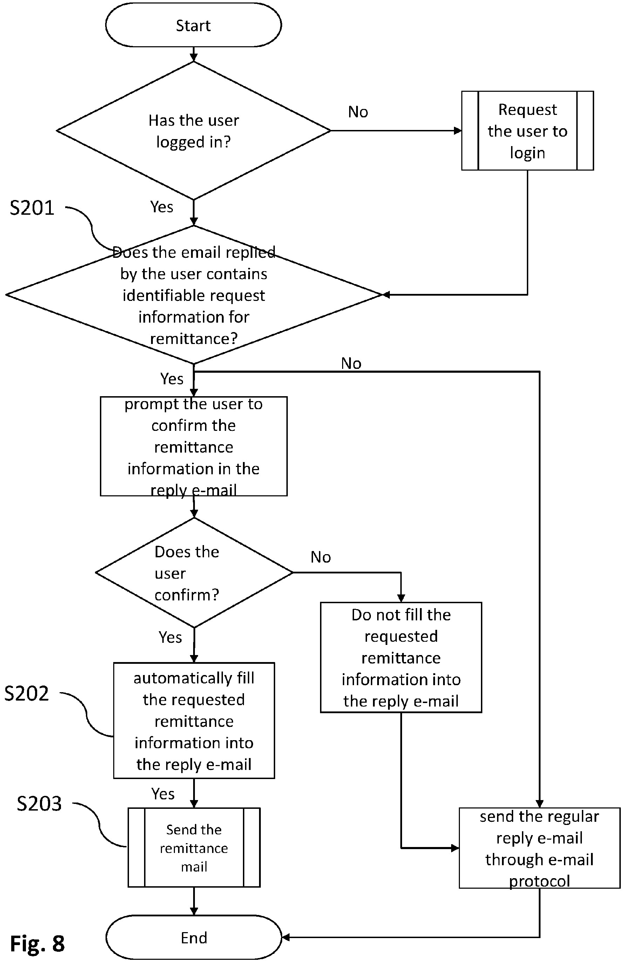

Further, in order to realize the automatic payment when an e-mail is automatically replied by the e-mail system, the present embodiment further includes a step of automatically replying to an e-mail. If the automatically-replied e-mail contains identifiable remittance request information, the process of automatically replying to an e-mail further includes a step of remitting via replying to the e-mail, with a flow chart shown in Fig. 8 including the following specific steps.

S201: a user is promoted whether to remit according to the remittance request information if the automatically-replied e-mail contains identifiable remittance request information.

S202: if yes, a reply e-mail is generated so that the e-mail interface of the reply e-mail is automatically loaded with the remittance identifier, and the remittee information, the amount and the currency type in the remittance request information are automatically entered into the remittance identifier to generate an automatically-replyable remittance mail, and the automatically-replyable remittance mail is sent to the remittance-mail management server.

S203: the remittance-mail management server dispatches the e-mail management server to send the e-mail message in the automatically-replied remittance mail and dispatching the fund management server to perform the remittance operation in the automatically-replied remittance mail according to the remittance identifier.

The above only involves the simultaneous transmission of information and value within the same platform. Further, in order to realize the synchronous transmission of information and value across platforms, the e-mail system further includes an external network interface, which includes an email interaction server, a digital currency interaction server, and a third-party digital/electronic currency interaction server; on the basis of the above e-mail sending steps, if the e-mail that is sent is an external e-mail, the embodiment further provides steps of sending the remittance mail across systems, and the steps of sending the remittance mail across systems are specifically as follows:
S301: an internal request is converted from the e-mail management server into external e-mail message according to a relevant protocol to perform information transmission through the e-mail interaction server;
S302: the internal remittance operation is performed through the fund management server, or the internal request from the fund management server is converted into the external request according to the relevant protocol to perform the remittance operation through the digital currency interaction server or/and the third party/electronic currency interaction server.

Further, in order to ensure the safety and reliability of information and value transmission, before the remittance-mail management server dispatches the fund management server, the remittance-mail management server first dispatches the e-mail management server to send the e-mail message, and after the remittance-mail management server receives an instruction from the e-mail management server indicating that the e-mail message has been sent successfully, the remittance-mail management server then dispatches the fund management server.

Further, in order to enable all parties to correctly track the progress of the remittance, a step of providing the remittance transaction number is provided, and the remittance transaction number is provided in the following two ways according to different currency types or different ways of internal and external remittance:
one way is: the remittance transaction number is obtained after the actual remittance and an auxiliary email containing the remittance transaction number may be sent to the sender and receiver after the remittance mail is sent and the actual remittance is performed, so that all parties may track the progress of the remittance through the remittance transaction number, wherein generally, the remittance transaction number may only be obtained for the third-party payment after the actual remittance; therefore, after the third-party digital/electronic currency interaction server converts the internal request from the fund management server into the external request according to the relevant protocol to perform the remittance operation, the step of sending the auxiliary e-mail to the receiver and the sender is included:
   the remittance results containing the remittance transaction number are fed back to the fund management server;
   the fund management server feeds back the remittance transaction number to the remittance-mail management server;
   the remittance-mail management server dispatches the e-mail management server to send the auxiliary e-mail to the receiver and the sender, and displays the auxiliary e-mail containing the remittance transaction number to the sender through the e-mail client.
the other way is: the remittance transaction number may be obtained before the actual remittance, such as digital currency such as Bitcoin or local remittance; therefore, if the remittance identifier is the internal remittance or the internal request from the fund management server is converted into the external request through the digital currency interaction server according to the relevant protocol to perform the remittance operation, the process of sending the remittance mail further includes a step of loading the remittance transaction number so that the e-mail message in the remittance mail is further carried with the remittance transaction number.

The e-mail sending method provided in the present embodiment may realize the cross-platform synchronous transmission or synchronous transmission in the same platform of digital/electronic currency and e-mail by adding the remittance identifier, i.e., realizing the cross-platform synchronous transmission of information and value or synchronous transmission in the same platform, and the sender and receiver of digital/electronic currency may also obtain real-name authentication through the e-mail system, thereby obtaining higher security, reliability and legal protection, and further improving the financial function of the e-mail system, such as sending and receiving bills, automatic deductions and payments, identity authentication and address authentication via e-mails; in this way, the reliability and efficiency of business communication and life applications may be greatly improved, and the related costs are reduced. By converging the electronic currency protocol, the e-mail system of the present embodiment may also implement some of the aforementioned financial functions through electronic currency, and characteristics of exchanging the digital currency and the electronic currency under the legal framework may be added.

### Embodiment Five:

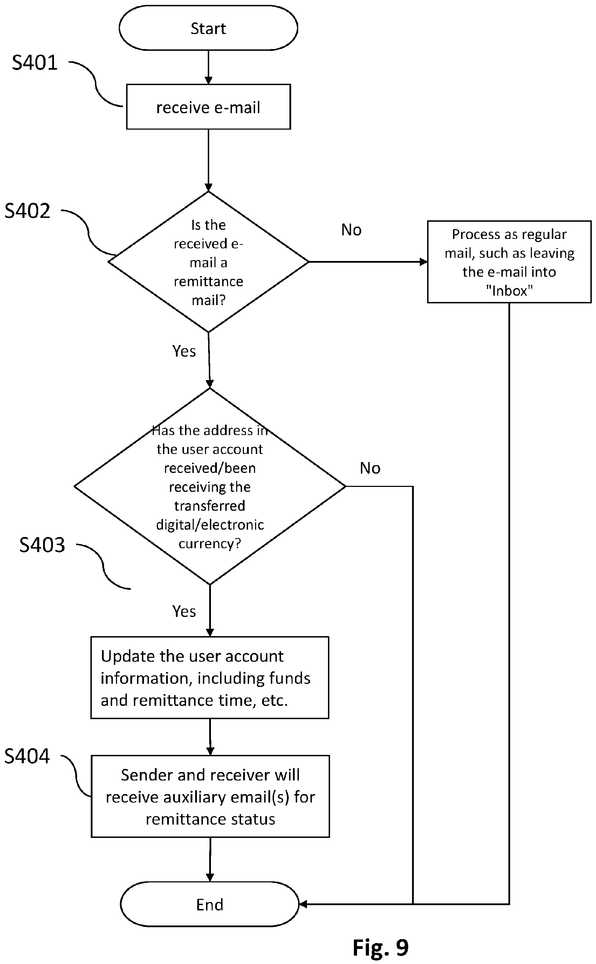

Based on Embodiments One, Two, and Three, the present embodiment provides an e-mail receiving method for the currency-protocol converged e-mail system, the e-mail system including a remittance plug-in, an e-mail client, a remittance-mail management server, an e-mail management server and a fund management server, wherein for the specific description of the e-mail system, please refer to Embodiment One, which will not be repeated in the present embodiment; the e-mail receiving method is applied to the e-mail system of Embodiment One to realize the synchronous reception of information and value within the system, and the method specifically includes the following steps, with a flow chart shown in Fig. 9.

S401: an e-mail is received by the e-mail management server, and an e-mail message is transmitted to the remittance-mail management server.

S402: determining whether the received e-mail contains a remittance identifier by the remittance-mail management server, wherein if not, the e-mail is processed as a regular mail, the remittance identifier being carried with the remittee information of the currency, a possible transaction number, the amount and the currency type, the currency type being a digital currency or/and an electronic currency.

The remittance identifier is located in the header of the e-mail or the auxiliary email. The remittance identifier is any one or a combination of a payment header, a remittance field, a remittance window, a view, and a visual identification element.

The remittee information includes at least one of:
a digital currency address of the remittee, or/and a name corresponding thereto;
an account and a service provider bound to the digital currency or the electronic currency of the remittee, or/and a name corresponding commonly thereto.

S403: if yes, the received e-mail is the remittance mail, and relevant information of the remittance mail is transmitted to the fund management server, and the fund management server queries a remittance status and feeds back query results to the remittance-mail management server.

S404: the remittance mail and the relevant information are sent to an e-mail client of the receiver according to the query results that are fed back by the remittance-mail management server.

The above only involves the simultaneous reception of information and value within the same platform. Further, in order to realize the synchronous reception of information and value across platforms, the e-mail system further includes an external network interface, which includes an email interaction server, a digital currency interaction server, and a third-party digital/electronic currency interaction server; on the basis of the above e-mail receiving steps, if the received e-mail is an external e-mail, the embodiment further provides a step of receiving the remittance mail across systems, and the step of receiving the remittance mail across systems are specifically as follows.

S501: an e-mail sent is acquired externally through the e-mail interaction server by the e-mail management server, and e-mail information of the e-mail is sent to the remittance-mail management server.

S502: determining whether the received e-mail information contains a remittance identifier by the remittance-mail management server, wherein if not, the e-mail is processed as the regular mail.

S503: if yes, the received e-mail is the remittance mail, and relevant information of the remittance mail is transmitted to the fund management server.

S504: the remittance status is queried through the digital currency interaction server of the sender or/and a third-party digital/electronic currency interaction server by the fund management server, and query results are fed back to the remittance-mail management server.

S505: the remittance mail and the relevant information are sent to an e-mail client of a receiver according to the query results that are fed back by the remittance-mail management server.

The foregoing uses particular examples to explain the present invention and is only to help in understanding the present invention but not to limit the present invention. For those skilled in the art to which the present invention belongs, according to the idea of the present invention, several simple deductions, modifications or substitutions can also be made.

## Claims

1. A currency-protocol converged e-mail system, comprising a remittance plug-in, an email client, a remittance-mail management server, an e-mail management server and a fund management server;
the e-mail client loaded with the remittance plug-in to provide a user with an e-mail interface with a remittance identifier, wherein the remittance identifier is carried with remittee information, an amount and a currency type, the currency type being a digital currency or/and an electronic currency;
the remittance-mail management server interacts with the e-mail client, the e-mail management server and the fund management server respectively;
the remittance-mail management server cooperates with the e-mail management server and the fund management server, and the remittance-mail management server judges whether an e-mail message contains the remittance identifier after receiving the e-mail message sent by the e-mail client, wherein if so, the remittance-mail management server dispatches the e-mail management server to send the e-mail message and dispatches the fund management server to perform remittance operations according to the remittance identifier; if not, the remittance-mail management server only dispatches the e-mail management server to send the e-mail message.

2. The e-mail system according to claim 1, wherein before the remittance-mail management server dispatches the fund management server, the remittance-mail management server first dispatches the e-mail management server to send the e-mail message, and after the remittance-mail management server receives an instruction from the e-mail management server indicating that the email message has been sent successfully, the remittance-mail management server then dispatches the fund management server.

3. The e-mail system according to claim 1, further comprising a database server, which is configured to store fund information and possible account information of a remitter and a remittee, the database server interacting with the remittance-mail management server and the fund management server respectively, the fund management server sending a remittance request to the database server according to a dispatch instruction of the remittance-mail management server, the database server updating the fund information related to the current remittance of the remitter and the remittee according to the remittance request to realize an internal remittance.

4. The e-mail system according to claim 3, further comprising an authentication server, which interacts with the database server and the remittance-mail management server, the authentication server being configured to authenticate a user identity, the remittance-mail management server cooperating with the e-mail management server and the fund management server after the remittance-mail management server obtains a user authentication status through the authentication server and confirms the validity.

5. The e-mail system according to claim 1, further comprising internal and external network interfaces, which comprise an e-mail interaction server, a digital currency interaction server, and a third-party digital/electronic currency interaction server;
the e-mail interaction server interacts with the e-mail management server to convert an internal request from the e-mail management server and external e-mail message from a network according to a relevant protocol to perform information sending and receiving operations;
the digital currency interaction server and the third-party digital/electronic currency interaction server interact with the fund management server respectively to convert the internal request from the fund management server and the external request from the network according to the relevant protocol to perform query and remittance operations.

6. The e-mail system according to claim 5, wherein the e-mail interaction server is a server running an e-mail service program, the digital currency interaction server is a server running a digital currency service program, and the third-party digital/electronic currency interaction server is a server supporting local or third-party interfaces.

7. The e-mail system according to claim 5, wherein after converting the internal request from the fund management server into the external request according to the relevant protocol to perform the remittance operation, the third-party digital/electronic currency interaction server feeds back remittance results containing a remittance transaction number to the fund management server; the fund management server feeds back the remittance transaction number to the remittance-mail management server, and the remittance-mail management server dispatches the e-mail management server to send an auxiliary e-mail containing the remittance transaction number to a receiver and a sender, and displays the auxiliary e-mail to the sender through the e-mail client.

8. The e-mail system according to claim 5, wherein if the remittance identifier is the internal remittance or the internal request from the fund management server is converted into the external request through the digital currency interaction server according to the relevant protocol to perform the remittance operation, the e-mail message is further carried with the remittance transaction number.

9. The e-mail system according to claims 1 to 8, wherein the remittance identifier is located at any position on a browsing page of the e-mail interface.

10. The e-mail system according to claim 9, wherein the remittance identifier is located in an e-mail header of the e-mail interface.

11. The e-mail system according to claim 9, wherein the remittance identifier is any one or a combination of a remittance field, a remittance window, a view, and a visual identification element.

12. The e-mail system according to claim 9, wherein the remittee information comprises at least one of:
a digital currency address of the remittee;
a name corresponding to the digital currency address of the remittee;
an account and a service provider bound to the digital currency or the electronic currency of the remittee;
a name corresponding commonly to the account and the service provider bound to the digital currency or the electronic currency of the remittee.

13. An e-mail sending method for the currency-protocol converged e-mail system according to any one of claims 1 to 12, wherein the e-mail system comprises a remittance plug-in, an email client, a remittance-mail management server, an e-mail management server and a fund management server, the e-mail sending method comprising steps of:
determining whether the remittance plug-in is triggered, wherein if not, the e-mail client generates a regular mail and sends the regular mail to the remittance-mail management server, and the remittance-mail management server dispatches the e-mail management server to send the regular mail;
if yes,
the e-mail client running the remittance plug-in to provide a user with an e-mail interface with a remittance identifier, wherein the remittance identifier is carried with remittee information, an amount and a currency type, the currency type being a digital currency or/and an electronic currency;
obtaining the remittee information, the amount and the currency type through the remittance identifier, and generating a remittance mail and send the remittance mail to the remittance-mail management server;
the remittance-mail management server cooperating with the e-mail management server and the fund management server, dispatching the e-mail management server to send an e-mail message in the remittance mail, and dispatching the fund management server to perform a remittance operation in the remittance mail according to the remittance identifier.

14. The e-mail sending method according to claim 13, further comprising a step of automatically replying to an e-mail, wherein if the automatically-replied e-mail contains identifiable remittance request information, the process of automatically replying to an e-mail further comprises a step of remitting via replying to the e-mail:
promoting a user whether to remit according to the remittance request information if the automatically-replied e-mail contains identifiable remittance request information;
if yes, generating a reply e-mail so that the e-mail interface of the reply e-mail is automatically loaded with the remittance identifier, automatically entering the remittee information, the amount and the currency type in the remittance request information into the remittance identifier to generate an automatically-replyable remittance mail, and sending the automatically-replyable remittance mail to the remittance-mail management server;
dispatching the e-mail management server to send the e-mail message in the automatically-replied remittance mail, and dispatching the fund management server to perform the remittance operation in the automatically-replied remittance mail according to the remittance identifier, by the remittance-mail management server.

15. The e-mail sending method according to claim 13 or 14, wherein the e-mail system further comprises an external network interface, which comprises an e-mail interaction server, a digital currency interaction server, and a third-party digital/electronic currency interaction server; the e-mail sending method further comprises a step of sending the remittance mail across systems:
converting an internal request from the e-mail management server into external e-mail message according to a relevant protocol to perform information transmission through the e-mail interaction server;
converting the internal request from the fund management server into the external request according to the relevant protocol to perform the remittance operation through the digital currency interaction server and/or the third party/electronic currency interaction server.

16. The e-mail sending method according to any one of claim 15, wherein before the remittance-mail management server dispatches the fund management server, the remittance-mail management server first dispatches the e-mail management server to send the e-mail message, and after the remittance-mail management server receives an instruction from the e-mail management server indicating that the e-mail message has been sent successfully , the remittance-mail management server then dispatches the fund management server.

17. The e-mail sending method according to claim 15, further comprising a step of sending the auxiliary e-mail to the receiver and the sender after the third-party digital/electronic currency interaction server converts the internal request from the fund management server into the external request according to the relevant protocol to perform the remittance operation:
feeding back the remittance result comprising the remittance transaction number to the fund management server;
feeding back the remittance transaction number to the remittance-mail management server by the fund management server;
dispatching the e-mail management server to send the auxiliary e-mail to the receiver and the sender by the remittance-mail management server, and displaying the auxiliary e-mail comprising the remittance transaction number to the sender.

18. The e-mail sending method according to claim 15, wherein if the remittance identifier is the internal remittance or the internal request from the fund management server is converted into the external request through the digital currency interaction server according to the relevant protocol to perform the remittance operation, the process of sending the remittance mail further comprises a step of loading the remittance transaction number so that the e-mail message in the remittance mail is further carried with the remittance transaction number.

19. The e-mail sending method according to claim 15, wherein the remittance identifier is located in an e-mail header of the e-mail interface.

20. The e-mail sending method according to claim 15, wherein the remittance identifier is any one or a combination of a remittance field, a remittance window, a view, and a visual identification element.

21. The e-mail sending method according to claim 15, wherein the remittee information comprises at least one of:
a digital currency address of the remittee;
a name corresponding to the digital currency address of the remittee;
an account and a service provider bound to the digital currency or the electronic currency of the remittee;
a name corresponding commonly to the account and the service provider bound to the digital currency or the electronic currency of the remittee.

22. An e-mail receiving method for the currency-protocol converged e-mail system according to any one of claims 1 to 12, wherein the e-mail system comprises a remittance plug-in, an email client, a remittance-mail management server, an e-mail management server and a fund management server, the e-mail receiving method comprising steps of:
receiving an e-mail by the e-mail management server, and transmitting an e-mail message to the remittance-mail management server;
determining whether the received e-mail contains a remittance identifier by the remittance-mail management server, wherein if not, the e-mail is processed as a regular mail, the remittance identifier being carried with the remittee information of the currency, a possible transaction number, an amount and a currency type, the currency type being a digital currency or/and an electronic currency;
if yes, the received e-mail is the remittance mail, and relevant information of the remittance mail is transmitted to the fund management server;
querying a remittance status by the fund management server, and feeding back query results to the remittance-mail management server;
sending the remittance mail and the relevant information to an e-mail client of the receiver according to the query results that are fed back by the remittance-mail management server.

23. The e-mail receiving method according to claim 22, wherein the e-mail system further comprises an external network interface, which comprises an e-mail interaction server, a digital currency interaction server, and a third-party digital/electronic currency interaction server; the e-mail receiving method further comprises a step of receiving the e-mail across systems:
acquiring an e-mail sent externally through the e-mail interaction server by the e-mail management server, and sending e-mail information of the e-mail to the remittance-mail management server;
determining whether the received e-mail information contains a remittance identifier by the remittance-mail management server, wherein if not, the e-mail is processed as the regular mail,
if yes, the received e-mail is the remittance mail, and relevant information of the remittance mail is transmitted to the fund management server;
querying the remittance status through the digital currency interaction server or/and a third-party digital/electronic currency interaction server by the fund management server, and feeding back query results to the remittance-mail management server;
sending the remittance mail and the relevant information to an e-mail client of the receiver according to the query results that are fed back by the remittance-mail management server.

24. The e-mail receiving method according to claim 22, wherein the remittance identifier is located in an e-mail header of the e-mail interface.

25. The e-mail receiving method according to claim 22, wherein the remittance identifier is any one or a combination of a remittance field, a remittance window, a view, and a visual identification element.

26. The e-mail receiving method according to claim 22, wherein the remittee information comprises at least one of:
a digital currency address of the remittee, or/and a name corresponding thereto;
an account and a service provider bound to the digital currency or the electronic currency of the remittee, or/and a name corresponding commonly thereto.
